(19) Europäisches Patentamt

European Patent Office

Office européen des brevets

(11) EP 0 508 769 B1

(12) **EUROPEAN PATENT SPECIFICATION**

(45) Date of publication and mention
of the grant of the patent:
**01.07.1998 Bulletin 1998/27**

(51) Int Cl.⁶: **G11B 15/60**

(21) Application number: **92303150.4**

(22) Date of filing: **09.04.1992**

(54) **Tape guide**

Bandführung

Guide de bande

(84) Designated Contracting States:
**DE FR GB**

(30) Priority: **10.04.1991 JP 78013/91**

(43) Date of publication of application:
**14.10.1992 Bulletin 1992/42**

(73) Proprietor: **SONY CORPORATION**
**Tokyo 141 (JP)**

(72) Inventors:
 • **Saito, Etsuro, c/o Patents Div., Sony Corporation**
**Tokyo 141 (JP)**
 • **Masuda, Shigeru, c/o Patents Div., Sony Corp.**
**Tokyo 141 (JP)**
 • **Shimodaira, Takashi, c/o Patents Div.,**
**Sony Corp.**
**Tokyo 141 (JP)**
 • **Sasao, Takashi, c/o Patents Div., Sony Corp.**
**Tokyo 141 (JP)**

(74) Representative:
**Purvis, William Michael Cameron et al**
**D. Young & Co.,**
**21 New Fetter Lane**
**London EC4A 1DA (GB)**

(56) References cited:
**EP-A- 0 386 712          EP-A- 0 403 651**
**US-A- 4 573 619**

 • **PATENT ABSTRACTS OF JAPAN vol. 014, no. 191 (P-1038)18 April 1990 & JP-A-20 035 649 (SONY) 6 February 1990**
 • **PATENT ABSTRACTS OF JAPAN vol. 014, no. 547 (P-1138)5 December 1990 & JP-A-22 032 850 (SONY) 14 September 1990**
 • **PATENT ABSTRACTS OF JAPAN vol. 013, no. 141 (P-853)7 April 1989 & JP-A-63 306 562 (MITSUBISHI) 14 December 1988**

## Description

The invention relates to a tape guide.

Such a tape guide may be used for example in a video tape recorder (VTR).

Tape guides for use in video tape recorders can be roughly classified into rotary tape guides and fixed tape guides.

Rotary tape guides are advantageous in that they impose less resistance to tape guided thereby. However, the speeds of travel of the tape guided by the rotary tape guides tend to reflect irregularities in the rotational speeds of bearings used in the rotary tape guides. Furthermore, if the direction in which a tape travels when it is guided by a rotary tape guide is not perpendicular to the axis of rotation of the rotary tape guide, then the tape is subjected to a transverse force applied by the tape guide. This can cause the tape to be transversely shifted until an edge thereof is damaged by contact with a flange of the rotary tape guide. Therefore, rotary tape guides must be machined and assembled with high accuracy, and hence cannot be manufactured easily.

Fixed tape guides allow tapes guided thereby to run stably, but present large resistance to running of the tapes.

There has been a demand for a fixed tape guide which imposes only small resistance to a running tape. One of such fixed tape guides that meets such a demand is an air tape guide in which air is ejected from small holes in the surface of a guide body to float the tape off the guide body and thereby reduce the resistance applied to the tape. The air tape guide is still problematic since a compressor is required as an air pressure source.

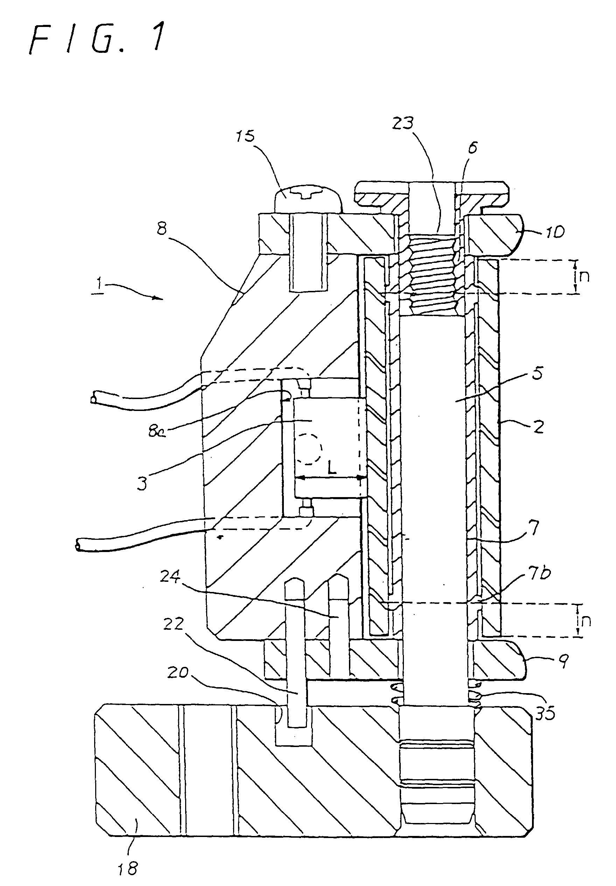

To eliminate the drawbacks of conventional tape guides, we have previously proposed, but not previously disclosed, an ultrasonic vibration tape guide as described in Japanese Patent Application No. 2-103627 (EP-A-0 453 306). The ultrasonic vibration tape guide employs ultrasonic energy to reduce resistance to a running tape while allowing the tape to run stably as with fixed tape guides. The ultrasonic vibration tape guide is adjustable in height. This previously-proposed ultrasonic vibration tape guide is described below with reference to Figure 1 of the accompanying drawings.

As shown in Figure 1, an ultrasonic vibration tape guide 1, includes a main shaft 5 mounted vertically on a base 18, and an ultrasonic vibrator 3 fixed to a guide member 2 that is supported on support teeth 7b of a cylindrical support shaft 7. The assembled body of the guide member 2 and the ultrasonic vibrator 3 is referred to as a guide member system. Lower and upper flanges 9 and 10 are disposed in abutment against lower and upper ends, respectively, of the support shaft 7, to guide opposite edges of a tape wound around the guide member 2.

The main shaft 5 extends through the lower and upper flanges 9, 10 and the support shaft 7. A height adjustment screw 6 is fitted in an inner surface of the upper end of the support shaft 7, and threaded over a screw 23 formed on the upper end of the main shaft 5.

The upper flange 10 is fastened to an upper end surface of an attachment 8 by a screw 15. The lower flange 9 is fixed to a lower end surface of the attachment 8 by fixing pins 22, 24.

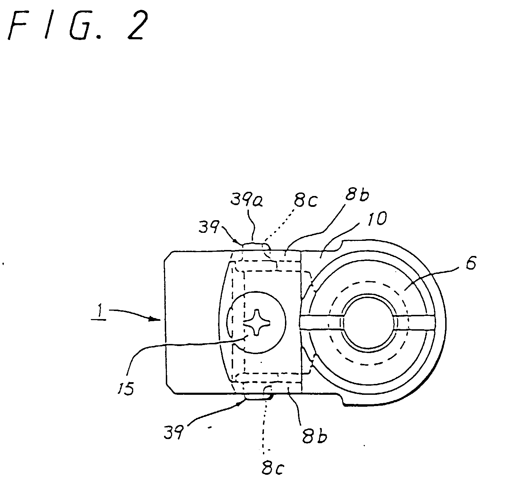

The attachment 8 has an ultrasonic vibrator storage space 8a defined therein which houses the ultrasonic vibrator 3 therein. As shown in Figure 2 of the accompanying drawings, the ultrasonic vibrator storage space 8a is defined as a recess in the shape of a rectangular parallelpiped between side walls 8b having respective stopper insertion holes 8c defined therein.

Disc-shaped stoppers 39 made of rubber have engaging protrusions 39a fitted respectively in the stopper insertion holes 8c. The ultrasonic vibrator 3 is sandwiched between the stoppers 39 to prevent the guide member 2 from rotating.

The attachment 8 keeps the lower and upper flanges 9, 10 parallel to each other and spaced from each other by a distance that is about 0.1mm larger than the length of the guide member 2.

As shown in Figure 1, the lower flange 9 is normally urged upwardly under the bias of a coil spring 35 disposed around the main shaft 5 between the lower flange 9 and the base 18. The base 18 has a pin insertion hole 20 in which there is inserted an end of the fixing pin 22 that projects downwardly from the lower surface of the lower flange 9.

When the height adjustment screw 6 is turned, the guide member 2 is adjusted in height under or against the bias of the coil spring 35.

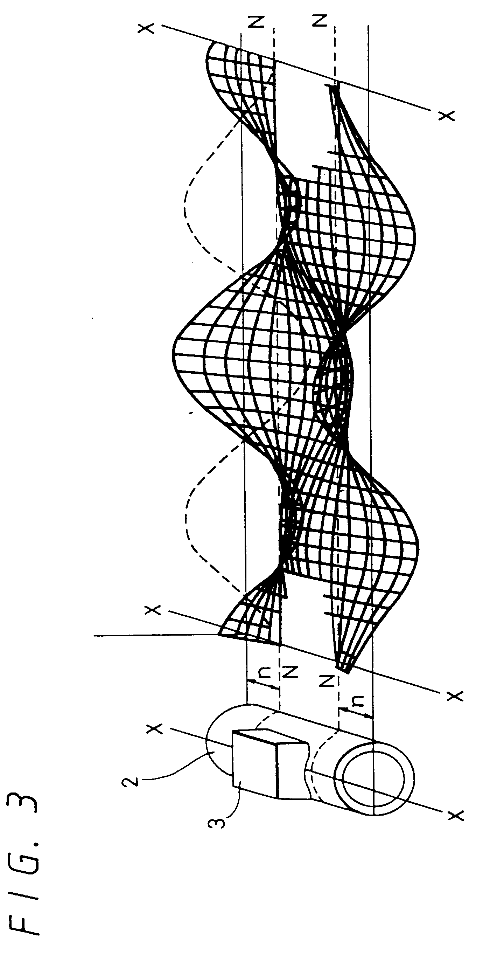

Figure 3 of the accompanying drawings shows standing-wave vibrations caused by the guide member 2 when an AC voltage having a frequency corresponding to a resonant frequency of the guide member system is applied to the ultrasonic vibrator 3, the standing-wave vibrations being cut along lines X - X, developed and then illustrated. Dotted lines N - N represent nodes of the standing-wave vibrations on the guide members 2 where the vibrations have zero amplitude. The nodes N on the guide member 2 are axially spaced from the ends of the guide member 2 by the distance $n$, and the support teeth 7b are also axially spaced from the ends of the guide member 2 by the distance $n$, i.e., are positioned at the nodes N.

Video tape recorders, which is one example of video apparatus which can employ the tape guide device 1 shown in Figure 1, have been required to become smaller in size recently, and such a demand consequently needs a tape of small size. The tape guide device 1 has also been required to be reduced in size. However, if the tape guide 1 is reduce in size without modification, then various problems arise in the tape guide member.

The tape guide device 1 shown in Figure 1 must keep the upper and lower flanges 10 and 9 parallel to each other and spaced from each other by the distance of the length of the guide member plus about 0.1mm, which requires the attachment 8 to be of high accuracy and also requires many assembly parts such as the screws and pins. As a consequence, the tape guide becomes large in size and hence cannot be reduced in size as desired.

Further, the upper and lower flanges 10 and 9, which are used to define the transverse direction of the tape, are normally utilised under the condition such that either of the upper and lower flanges 10 and 9 of the tape guide device 1 is brought into contact with the tape. Of the upper and lower flanges 10 and 9, either flange in contact with the tape (upper or lower flange 10 or 9) must be made of a hard wearproof material because it is required to guide the tape for a long period of time. Such hard wear-proof material is generally difficult to machine. Further, if a flange made of such material becomes complex in shape, it becomes expensive. For this reason, the previously-proposed tape guide device cannot be reduced in size as described above.

Furthermore, in the tape guide device 1 shown in Figure 1, the shape of the upper flange 10 to guide the tape becomes complex as shown in Figure 2 and is not suitable for making the tape guide 1 compact in size.

Problems of the guide member vibrating member, i.e., the ultrasonic vibrator 3 are as follows:

The surface of the ultrasonic vibrator 3 on which it is mounted on the guide member 2 is a curved surface of one end portion of a piezoelectric ceramic element defined in correspondence with the diameter of the guide member 2. This curved surface is bonded to the outer circumferential surface of the guide member 2 as shown by a dotted line in Figure 1.

However, if the curved surface is formed on one end portion of the piezoelectric ceramic element, then positive and negative electrodes are exposed and hence sometimes short-circuited. Further, if the guide member 2 is made of a conductive material, then a short-circuit occurs between the positive and negative electrodes similarly as described above.

Furthermore, since the piezoelectric ceramic element is formed of laminated layers of the piezoelectric ceramic plate and positive and negative electrodes as described above, their surfaces associated with the outer circumferential surface of the guide member 2 cannot be formed with high accuracy and also the piezoelectric ceramic element bonded to the guide member 2 tends to be peeled off. For this reason, the conventional tape guide device is not suitable for small video tape recorders.

The ultrasonic vibrator 3 has further problems as follows:

A length of the ultrasonic vibrator 3 in the radius direction of the guide member 2, which is in contact with or bonded to and generates standing-waves in the guide member 2 considerably influences the increase or decrease of friction coefficient $\mu$ of friction generated by the contact of the tape with the guide member 2. Accordingly, the length of the ultrasonic vibrator 3 extending in the diametrical direction of the guide member 2 is selected to be sufficient to minimise the friction coefficient $\mu$ of friction generated by the contact between the tape and the guide member 2.

However, in the tape guide device 1 shown in Figure 1, the length (shown by reference letter L in Figure 1) of the ultrasonic vibrator 3 extending in the diametrical direction of the guide member 2 is not selected to be optimum, resulting in a deterioration in the efficiency with which the friction generated by the contact between the tape and the guide member 2 is reduced. There is then the disadvantage that the temperature on the ultrasonic vibrator 3 is increased considerably.

EP-A-386 712, the invention of which is also one of the inventors of this invention, discloses tape guides acted upon by ultrasonic oscillation generating transducers in the form of a stack of piezoelectric transducer plates wherein the axis of the transducer, ie perpendicular to the plane of the plates, can be either perpendicular to or parallel to the axis of a tape guide which actually engages a tape, but wherein, in all embodiments, the opposite ends of the transducer are always engaged with components of the tape guide, either one end with the tape guide member and the other end with a body member or one end with a stop or recess end of the tape guide member and the other end with a further stop or recess end of the tape guide member.

According to the invention there is provided a tape guide comprising a guide member of a cylindrical configuration to guide a tape; an ultrasonic vibrator secured to the guide member to vibrate the guide member with standing-waves; a support to support the guide member at supporting node positions of the standing-waves; a pair of tape position restricting means to restrict the position of the tape with respect to a transverse direction of the guide member; and rotation stop means provided on at least one of the pair of tape position restricting means to prevent the guide member from rotating;

characterised in that the length of the ultrasonic vibrator, measured from a position at which the ultrasonic vibrator is attached to the guide member, in the diametrical direction is selected so as to minimise the coefficient of friction between the guide member and the tape and amounts to (outer diameter + inner diameter) of the guide member/2.5.

In such a tape guide the efficiency with which friction generated between a tape and a guide member due to vibration of an ultrasonic vibrator is reduced can be maximised, thereby allowing a small and inexpensive tape guide.

The invention is diagrammatically illustrated by way of example in the accompanying drawings, in which:

Figure 1 is a cross-sectional view illustrating an example of a tape guide of previously proposed but not previously disclosed kind;
Figure 2 is a plan view corresponding to Figure 1;

Figure 3 is graph showing a vibrating condition of standing-waves used to explain the invention;

Figure 4 is an exploded perspective view illustrating a first embodiment of a tape guide according to the invention;

Figure 5 is a cross-sectional view of the first embodiment of the tape guide according to the invention, and to which references will be made in explaining an assembly process thereof;

Figure 6 is a plan view corresponding to Figure 5;

Figure 7 is a cross-sectional side view illustrating a main portion of the first embodiment of the invention;

Figure 8 is a cross-sectional side view illustrating a main portion of a second embodiment of a tape guide according to the invention;

Figure 9 is a plan view of the second embodiment of the tape guide according to the invention;

Figure 10 is a cross-sectional side view illustrating a third embodiment of the tape guide according to the invention;

Figure 11 is a plan view corresponding to Figure 10;

Figure 12 is a perspective view illustrating a main portion of an ultrasonic vibrator;

Figure 13 is a cross-sectional view illustrating the structure of the ultrasonic vibrator of Figure 12; and

Figures 14 and 15 are graphs used to explain operation of a tape guide according to the invention.

The invention will now be described in detail with reference to the accompanying drawings.

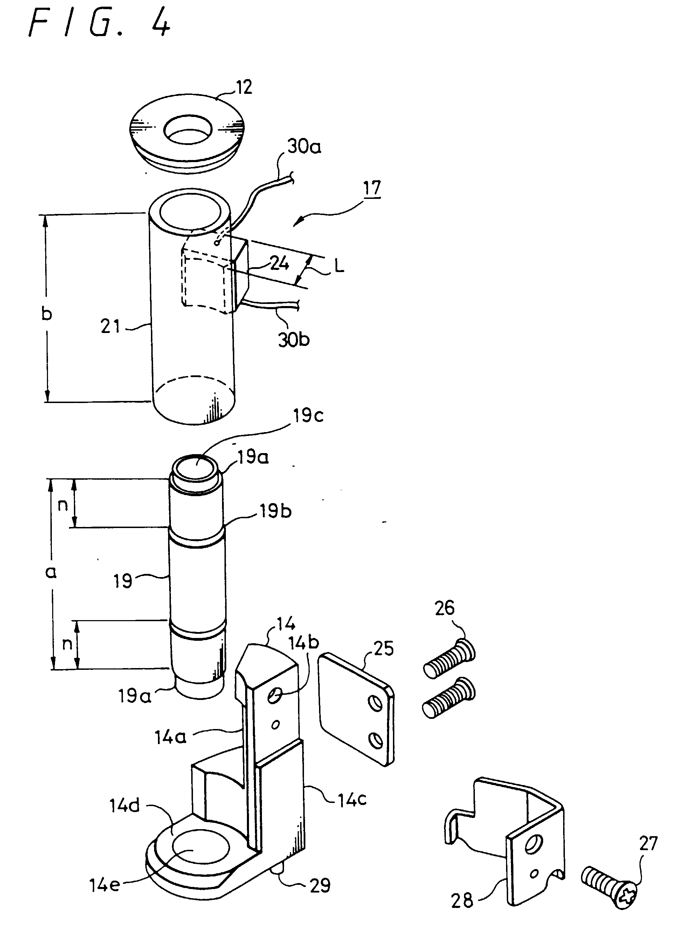

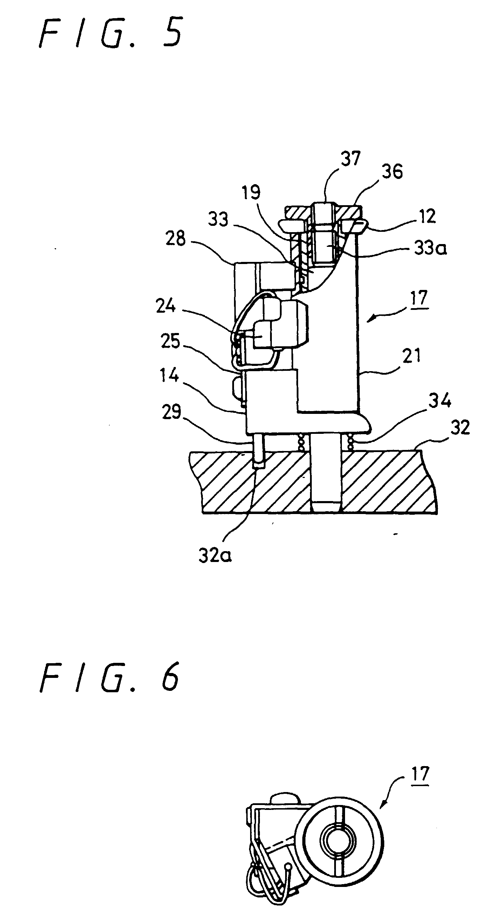

As shown in Figures 4 to 7, a tape guide 17 includes a ceramic guide member 21, an ultrasonic vibrator 24 and a support shaft 19. Annular supporting protrusions 19$\underline{b}$ are formed on the outer surface of the support shaft 19 at equal distances $\underline{n}$ from the ends as shown in Figure 4. An upper flange 12 is provided as a guide flange and a rotation stop member 14 is unitarily formed with a lower flange 14$\underline{d}$. A stopper plate 28 is secured to the rotation stop member 14 by fitting a screw 27 into a tapped hole 14$\underline{b}$ of the rotation stop member 14. An ultrasonic vibrator 24 disposed at a predetermined position of the rotation stop member 14 is held by the stopper plate 28. Further, one end face of the ultrasonic vibrator 24 is bonded to the surface of the guide member 21, for example, thereby to prevent the guide member 21 from rotating. A terminal plate 25 is secured to the rotation stop member 14 by fitting screws 26 into tapped holes of the rotation stop member 14. A rotation stop pin 29 co-operates with a base 32 (see Figure 5) to prevent the tape guide 17 from rotating.

The material of the guide member 21 is not limited to the above-mentioned ceramic material and the guide member 21 might be formed of a conductive ceramic material mainly made of alumina with the addition of titanium oxide. Thus, the occurrence of static electricity can be avoided thereby allowing the tape to run stably. When the guide member 21 is made of a conductive material, a ground material for grounding the guide member 21 must be provided. Further, the supporting protrusions 19$\underline{b}$ might be made of a soft material such as rubber or plastics. If the supporting protrusions 19$\underline{b}$ are made of such soft material, then noise between the guide member 21 and the supporting protrusions 19$\underline{b}$ can be avoided.

When the tape guide 17 is assembled, a lower stepped portion 19$\underline{a}$ formed on the end face of the support shaft 19 is engaged in a hole 14$\underline{e}$ of the rotation preventing member 14, the guide member 21 is engaged over the support shaft 19, the ultrasonic vibrator 24 is sandwiched between a concave portion 14$\underline{a}$ of the rotation preventing member 14 and the stopper plate 28, the upper flange 12 is fitted onto an upper stepped portion 19$\underline{a}$ of the support shaft 19 and lead wires 30$\underline{a}$, 30$\underline{b}$, of the ultrasonic vibrator 24 are coupled to the terminal plate 25 by a suitable process such as soldering for example. As shown in Figure 4, in this embodiment, the length $\underline{a}$ of the support shaft 19, excluding the stepped portions 19$\underline{a}$ formed on the respective ends of the support shaft 19, is selected to be longer than the length $\underline{b}$ of the guide member 21 by about 0.1mm and is selected to be shorter than a distance between the upper flange 12 and the lower flange 14$\underline{d}$ by about 0.1mm.

Figure 5 of the accompanying drawings shows the tape guide 17 mounted on the base 32 after the assembly process thereof is finished.

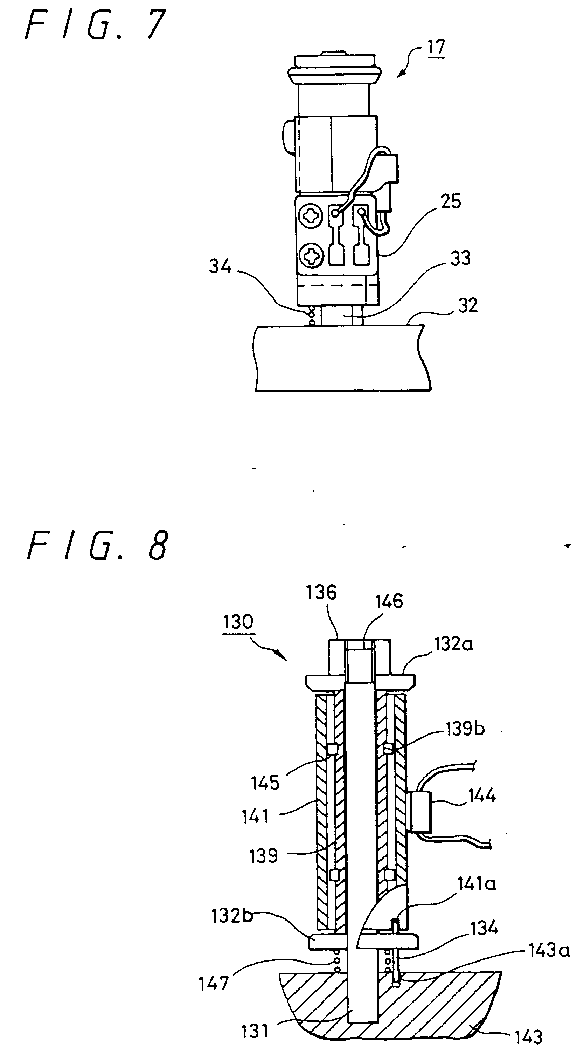

Upon assembly, a main shaft 33 (see Figure 7) is vertically attached to the base 32. A coil spring 34 is inserted into the main shaft 33, a hollow portion 19$\underline{c}$ (see Figure 4) of the support shaft 19 of the tape guide 17 is inserted into the main shaft 33, and the rotation stop pin 29 is fitted into a hole 32$\underline{a}$ bored in the base 32. Thereafter, a height adjustment screw 36 is screwed into a screw portion 33$\underline{a}$ formed in the end portion of the main shaft 33.

When the height adjustment screw 36 is turned, the height of the tape guide device 17 can be adjusted under or against the spring-biasing force of the coil spring 34. The height adjustment range is about 0.5mm. Since the rotation stop pin 29 is fitted into the hole 32$\underline{a}$ of the base 32 by a depth of about 2mm, for example, the tape guide device 17 can be prevented from rotating about the main shaft 33 while the height thereof is adjusted.

At the completion of the height adjustment, the screw portion 33$\underline{a}$ of the main shaft 33 is fastened by a locking screw 37, thereby to prevent the height adjustment screw 36 from rotating. Figure 6 is a top view of the tape guide device 17 shown in Figure 5, and Figure 7 is a side view of the tape guide device 17 shown in Figure 5 as seen in the direction of the terminal plate 25.

When AC voltage from the video tape recorder body, for example, is supplied to the ultrasonic vibrator 24 through the lead wires 30$\underline{a}$, 30$\underline{b}$, then standing-waves occur in the guide member 21. A coefficient of friction of contact of the tape and the guide member 21 when the tape is guided and transported by the tape guide 17 is reduced to a small fraction of that generated when the AC voltage is not supplied to the ultrasonic vibrator 24.

The standing-waves produced in the guide member 21 are represented in Figure 3. The supporting protrusions 19b in this embodiment are attached to the guide member 21 at the positions distant from the respective end faces thereof by the equal distance of about n as shown in Figure 4.

Further, the upper flange 12 can be made circular in shape as shown in Figure 4, and the rotation stop member 14 can be manufactured by a plastics moulding or die casting.

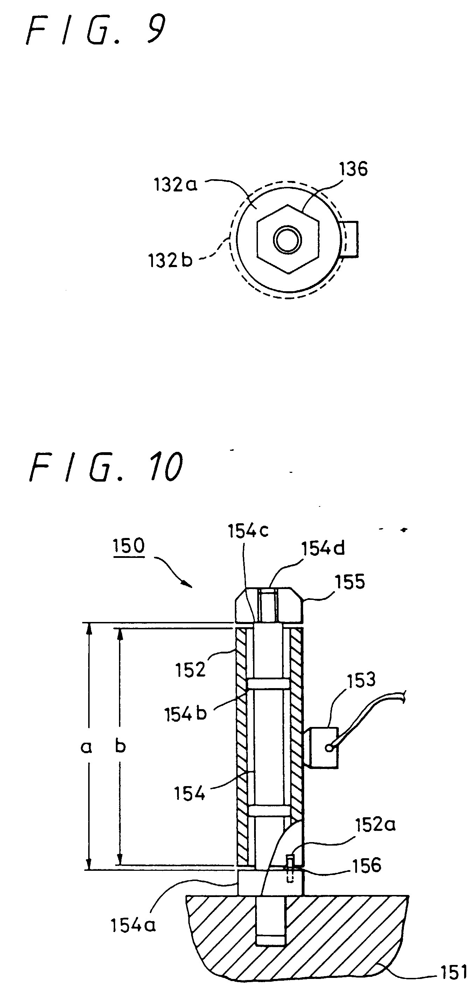

Figures 8 and 9 show a second embodiment having a tape guide 130 and a rotation preventing pin 134 formed on a lower flange 132b.

The tape guide 130 comprises a base 143, a main shaft 131 attached to the base 143, a guide member 141 made of ceramics, for example, an ultrasonic vibrator 144, a support shaft 139, upper and lower flanges 132a and 132b, resin support rings 145 fitted into a concave portion 139b formed on the support shaft 139 at its predetermined positions, a height adjustment screw 136 engaged with a screw portion 146 formed on the end portion of the main shaft 131, a coil spring 147 and a rotation stop pin 134 inserted into the lower flange 132b. One end of the rotation stop pin 134 is fitted into a hole 143a bored in the base 143 and the other end thereof is fitted into a recess 141a formed in the end portion of the guide member 141.

The length of the support shaft 139 is selected to be longer than that of the guide member 141 by about 0.1mm and is also selected to be shorter than the length between the upper and lower flanges 132a and 132b by about 0.1mm. The assembly process or the like of the tape guide 130 is substantially the same as that of the tape guide device 17 shown in Figure 4 and therefore need not be described in detail.

When the height adjustment screw 136 is turned, then the height of the tape guide device 130 can be adjusted under or against the spring-biasing force of the coil spring 147. The height of the tape guide device 130 can be adjusted over a range of about 0.5mm. In this case, since the rotation stop pin 134 is engaged into the hole 143a of the base 143 by a depth of about 3mm, for example, the tape guide device 130 can be prevented from rotating about the main shaft 131 while the height thereof is adjusted.

Further, the upper and lower flanges 132a and 132b can be made circular in shape as shown in Figure 9.

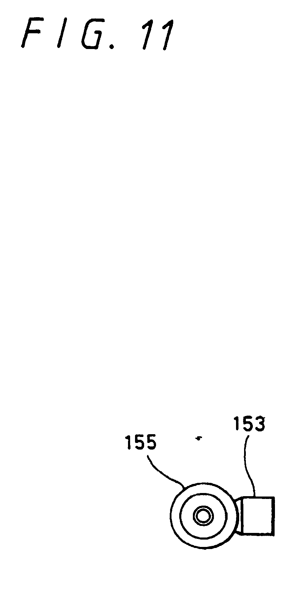

In the third embodiment, described with reference to Figure 10 and 11, a rotation stop pin 156 is fitted into a boss 154a which also serves as a lower flange.

As shown in Figure 10, a tape guide 150 comprises a base 151, a main shaft 154 attached to the base 151, a guide member 152 made of ceramics, an ultrasonic vibrator 153, the boss 154a formed on the main shaft 154, supporting protrusions 154b formed on the main shaft 154 at predetermined positions thereof, a lock nut 155 fitted into a screw portion 154d formed on the end portion of the main shaft 154 and the rotation stop pin 156 vertically provided on the boss 154a. The end portion of the rotation stop pin 156 is inserted into a recess 152a formed in the end portion of the guide member 152.

As can be seen in Figure 10, according to this embodiment, a distance a between the upper end of the boss 154a and a shoulder portion 154c of the main shaft 154 relative to the length b of the guide member 152 is selected so as to satisfy an equality of $a = b + 0.1$. In this case, the lock nut 155 is stopped at the shoulder portion 154c so that, when the guide member 152 is sandwiched between the upper end of the boss 154a and the lower end of the lock nut 155, a clearance of about 0.1mm is produced therebetween.

Further, there is a very small clearance between an inner periphery of the guide member 152 and an outer periphery of the main shaft 154, whereby the guide member 152 can rotate about the main shaft 154 freely. In this case, however, since the rotation stop pin 156 is inserted into the recess 152a by a depth of about 0.5mm, the guide member 152 can be prevented from rotating about the main shaft 154.

With the rotation stop mechanism for the guide member described the number of the assembly parts of this tape guide can be reduced and the mechanism thereof can be simplified, which can provide a small and inexpensive tape guide.

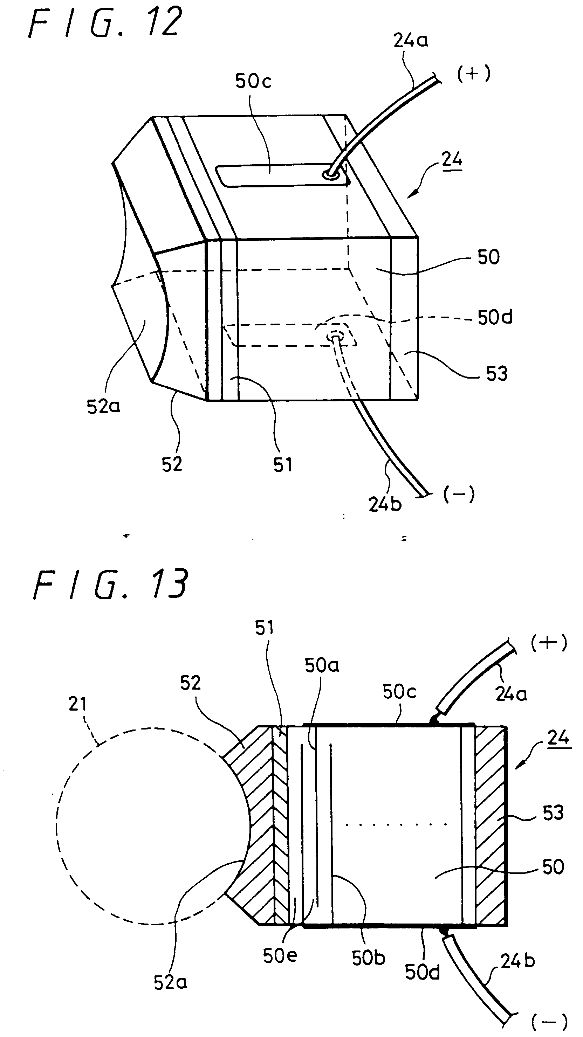

The ultrasonic vibrator, for example the ultrasonic vibrator 24 of Figures 4 to 7, can be constructed as shown in Figures 12 and 13.

In Figure 12, a piezoelectric ceramic element 50 has a number of piezoelectric ceramic plates 50e with positive and negative electrodes 50a and 50b interposed alternately with a clearance of 0.1mm therebetween. The positive electrodes 50a are electrically connected to a positive electrode plate 50c located on one side surface, and the negative electrodes 50b are electrically connected to a negative electrode plate 50d located on another side surface.

As shown in Figure 12, the positive electrode plate 50c is disposed on the upper surface portion of the piezoelectric ceramic element 50, a positive electrode side lead wire 24a is coupled to the positive electrode plate 50c, the negative electrode plate 50d is disposed on the lower surface portion of the piezoelectric ceramic element 50 and a negative electrode side lead wire 24b is coupled to the negative electrode plate 50d. A piezoelectric ceramic dummy layer 51 having no electrode, for example, is secured to one end face of the piezoelectric ceramic element 50 and a fixing member 52 such as an aluminium extrusion moulded member, a ceramic moulded member or the like is secured to the dummy layer 51. The opposite side of the fixing member 52 to that at which the fixing member 52 is secured to the dummy layer 51 is formed as a curved fixing surface 52a to be secured to the outer circumferential surface of the guide member 21. A piezoelectric ceramic dummy layer 53 having no electrode, for example, is secured to the outer end face of the piezoelectric ceramic element 50.

As shown in Figure 13, one end portion of the ultrasonic vibrator 24, i.e., the side of the ultrasonic vibrator 24 at which the ultrasonic vibrator 24 is secured to the guide member 21 shown by a dotted circle, is formed as a conical-shaped portion which is reduced in diameter from the dummy layer 51 towards the fixing surface 52a. The reason for this is to reduce an area of the fixing surface 52a secured to the guide member 21 while keeping a large cross section of the piezoelectric ceramic element 50 in order to obtain a drive power. This area of the fixing surface 52a may be selected to be 9mm$^2$ relative to a cross section of 25mm$^2$ of the piezoelectric ceramic element 50, for example. If the area of the fixing surface 52a is reduced, then the waveform of the standing-wave generated in the guide member 21 is prevented from being approximated to a standing-wave generated when the guide member 21 is resonated alone, thereby improving efficiency. Furthermore, if the area of the fixing surface 52a of the fixing member 52, which is the fixing portion secured to the guide member 21, is reduced, then an internal stress generated by a difference between thermal expansion coefficients of the guide member 21 and of the fixing member 52 can be reduced and the ultrasonic vibrator 24 can be prevented from becoming detached from the guide member 21.

While the fixing member 52 such as the aluminium extrusion moulded member, the ceramic material member or the like can be secured to the piezoelectric ceramic dummy layer 51 having no electrode, for example, as described above, the fixing member 52 is not limited thereto and might be formed by moulding the dummy layer 51 and the fixing member 52 unitarily from ceramics or the like, which can make the tape guide apparatus more inexpensive.

Further, the length L of the ultrasonic vibrator 24, measured from the position at which the ultrasonic vibrator 24 is secured to the guide member 21, in the diametrical direction is selected to be optimum so that the friction coefficient of the friction generated when the tape and the guide member 21 contact with each other is minimised.

Figure 3 of the accompanying drawings shows the condition of the standing-wave vibrations caused by the guide member 21 when AC voltage is applied to the ultrasonic vibrator 24. In Figure 3, the ordinate represents a displacement in the radial direction and this condition represents the condition such that the ultrasonic vibrator 24 vibrates up to the maximum amplitude position of the vibration cycle. Therefore, the vibration is displaced to the position shown by broken lines in Figure 3 after one-half cycle.

The dotted lines N - N represent nodes on the guide member 21 where the vibrations have zero amplitude. The nodes N on the guide member 21 are each axially spaced from the respective end of the guide member 21 by a distance n, and the support protrusions 19b are also axially spaced from the ends of the guide member 21 by the distance n as shown in Figure 4.

The magnitude of the amplitude is substantially proportional to the magnitude of the input voltage, while the coefficient of friction becomes small in proportion to the magnitude of the amplitude. Therefore, in order to reduce the coefficient of friction, the magnitude of the input voltage must be increased. The length L of the ultrasonic vibrator 24, measured from the position at which the ultrasonic vibrator 24 is attached to the guide member 21, in the diametrical direction as shown in Figure 1 is enumerated as one of important factors associated with the degree of friction coefficient.

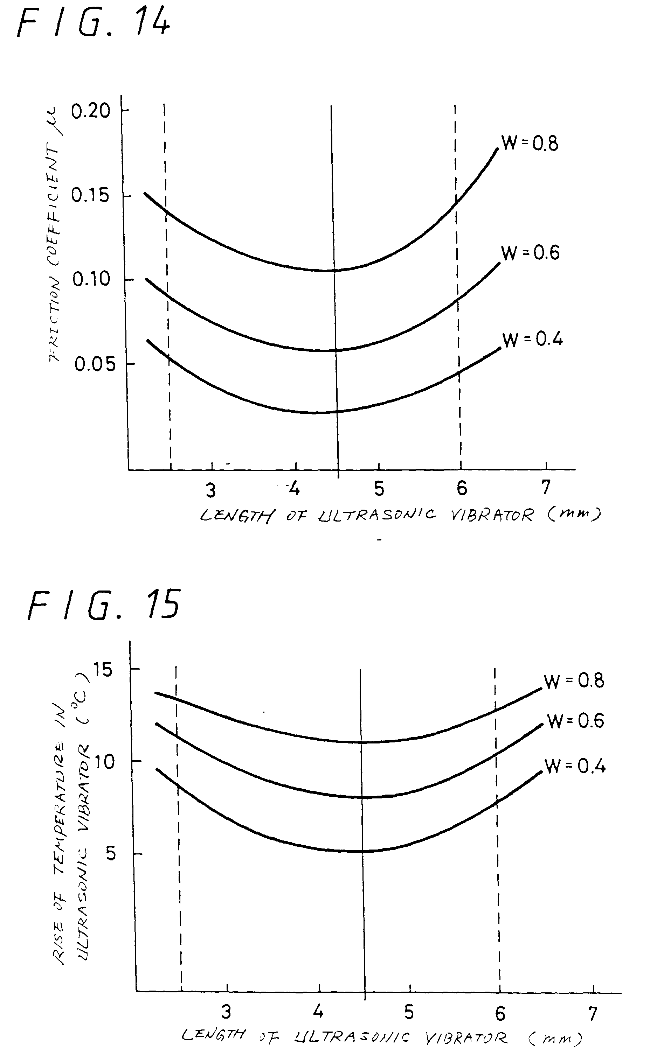

Figure 14 shows curves of measured results in a graph having a left-hand vertical axis representative of the friction coefficient μ and a horizontal axis representative of the length L (mm) of the ultrasonic vibrator 24, from the position at which the ultrasonic vibrator 24 is attached to the guide member 21, in the diametrical direction when voltages 0.4 (W), 0.6 (W) and 0.8 (W) are applied to the ultrasonic vibrator 24, respectively.

Study of Figure 14 indicates that the friction coefficient μ is constantly minimised regardless of the change of the value of the input voltage when the length L of the ultrasonic vibrator 24 in which the ultrasonic vibrator 24 is attached to the guide member 21 in the diametrical direction is 4.5mm.

Figure 15 shows curves of measured results in a graph having a left-hand vertical axis representative of the rise of temperature (°C) as compared with the case that no voltage is applied to the ultrasonic vibrator 24 and a horizontal axis representative of the length L (mm) of the ultrasonic vibrator 24, from the position at which the ultrasonic vibrator 24 is attached to the guide member 21, in the diametrical direction when voltages 0.4 (W), 0.6 (W) and 0.8 (W) are applied to the ultrasonic vibrator 24, respectively.

Study of Figure 15 indicates that the rise of temperature as compared with the case such that no voltage is applied to the ultrasonic vibrator 24 is constantly minimised regardless of the change of the value of the input voltage when the length L of the ultrasonic vibrator 24 is 4.5mm.

The measured data in Figures 14 and 15 was obtained when the guide member 21 was 5mm in inner diameter, 7mm in outer diameter and 19.5mm in length, for example. Accordingly, the length L has an optimum value associated with the dimension of the guide member 21 so as to minimise the friction coefficient μ , and this optimum value of the length L can be calculated as:

(outer diameter + inner diameter) of the guide member/2.5

Furthermore, as is clear from Figures 13 and 14, a value of the friction coefficient μ of approximately ± 30% relative to the optimum length L of the ultrasonic vibrator 24 can be employed in actual practice.

If L is the length of the ultrasonic vibrator 24 from the position at which the ultrasonic vibrator 24 is attached to the guide member 21 in the diametrical direction, D is the outer diameter of the guide member 21 and $\underline{d}$ is the inner diameter of the guide member 21. Then, the optimum length $\underline{L}$ of the ultrasonic vibrator 24 is expressed as:

$$(D + \underline{d}) \times 0.2 \leq L \leq (D + \underline{d}) \times 0.5$$

When AC voltage from the video tape recorder body, for example is supplied through the lead wires 30$\underline{a}$, 30$\underline{b}$, to the ultrasonic vibrator 24 of the tape guide device 21, the guide member 21 is 5mm in inner diameter, 7mm in outer diameter and 19.5mm in length and the length L of the ultrasonic vibrator 24 is 4.5mm, standing-waves are generated in the guide member 21.

The friction coefficient of the friction generated by contact between the tape and the tape guide when the tape is guided by the tape guide 17 to run in this condition is reduced to a very small fraction of that of the case where AC voltage is not supplied to the ultrasonic vibrator 24.

Furthermore, since the length $\underline{L}$ of the ultrasonic vibrator is selected to be optimum on the basis of the equation $(D + \underline{d}) \times 0.2 \leq L \leq (D + \underline{d}) \times 0.5$ where L is the length of the ultrasonic vibrator 24, D is the outer diameter of the guide member 21 and $\underline{d}$ is the inner diameter of the guide member 21, the length of the ultrasonic vibrator 24 is optimised and efficiency at which the friction generated by the contact of the tape and the guide member 24 is reduced is maximised, whereby suppression of the rise of temperature in the ultrasonic vibrator 24 is a maximum.

**Claims**

1. A tape guide (17, 130, 150) comprising a guide member (21, 141, 152) of a cylindrical configuration to guide a tape; an ultrasonic vibrator (24, 144, 153) secured to the guide member (21, 141, 152) to vibrate the guide member with standing-waves; a support (19, 139, 154) to support the guide member (21, 141, 152) at supporting node positions of the standing-waves; a pair of tape position restricting means (12, 14$\underline{d}$, 132$\underline{a}$, 132$\underline{b}$, 154$\underline{a}$, 155) to restrict the position of the tape with respect to a transverse direction of the guide member (21, 141, 152); and rotation stop means (29, 134, 156) provided on at least one of the pair of tape position restricting means (12, 14$\underline{d}$, 132$\underline{a}$, 132$\underline{b}$, 154$\underline{a}$, 155) to prevent the guide member (21, 141, 152) from rotating; characterised in that the length (L) of the ultrasonic vibrator, measured from a position at which the ultrasonic vibrator (24) is attached to the guide member (21), in the diametrical direction is selected so as to minimise the coefficient of friction (μ) between the guide member (21) and the tape and amounts to (outer diameter + inner diameter) of the guide member/2.5.

2. A tape guide according to claim 1, wherein the rotation stop means comprises a pin member (29, 134, 156) provided on the tape position restricting means located on a base (32, 143, 151) to which the support member (19, 139, 154) is secured and an engaging member (32$\underline{a}$, 143$\underline{a}$) at a predetermined position of the base (32, 143, 151) to engage the pin member (29, 134, 156).

3. A tape guide according to claim 2, wherein the rotation preventing means includes a rotation stop member (28) provided on the tape position restricting member (14) on the base side to contact the ultrasonic vibrator (24) so that the ultrasonic vibrator (24) is prevented from rotating.

4. A tape guide according to claim 2, wherein the rotation preventing means includes a recess portion (141$\underline{a}$) formed on the guide member (152) and to which the pin member (134) is fitted.

5. A tape guide according to claim 1, wherein the ultrasonic vibrator (24) comprises a drive layer (50) which is driven in response to the application of a drive signal and a buffer layer (51) which is not driven by the application of the drive signal, the non-drive layer (51) being secured to the guide member (21).

6. A tape guide according to claim 5, wherein an area (52$\underline{a}$) at which the buffer layer contacts the guide member (21) is smaller than an area in which the buffer layer (51) contacts the drive layer (50) in the ultrasonic vibrator (24).

7. A tape guide according to claim 5, wherein the guide member (21) is made of a conductive material.

8. A tape guide according to claim 1, wherein the support member (19, 139, 154) comprises a short shaft (33, 131, 154) vertically secured to a base (32, 141, 141) and annular-shaped guide support means (19$\underline{b}$, 145, 154$\underline{b}$) made of a soft material provided on the support shaft (33, 131, 154) in an opposing relation to nodes of standing-waves.

**Patentansprüche**

1. Bandführung (17, 130, 150), mit:

   einem Führungsteil (21, 141, 152) mit einem zylindrischen Aufbau, um ein Band zu führen;

einem Ultraschallschwinger (24, 144, 153), der am Führungsteil (21, 141, 152) befestigt ist, um das Führungsteil mit stehenden Wellen in Schwingung zu versetzen;

einem Lager (19, 139, 154), um das Führungsteil (21, 141, 152) an lagernden Knoten-Positionen der stehenden Wellen zu lagern;

einem Paar von Bandpositions-Beschränkungsmitteln (12, 14d, 132a, 132b, 154a, 155), um die Position des Bandes in bezug auf eine transversale Richtung des Führungsteils (21, 141, 152) einzuschränken; und

einer Drehstoppeinrichtung (29, 134, 156), die auf zumindest einem des Paars der Bandpositions-Beschränkungsmittel (12, 14d, 132a, 132b, 154a, 155) vorgesehen ist, um zu verhindern, daß das Führungsteil (21, 141, 152) sich dreht;

**dadurch gekennzeichnet, daß**

die Länge (L) des Ultraschallschwingers - gemessen von einer Position, bei der der Ultraschallschwinger (24) am Führungsteil (21) befestigt ist, in der diametralen Richtung - so ausgewählt wird, daß der Reibungskoeffizient (μ) zwischen dem Führungsteil (21) und dem Band minimiert wird, und sich beläuft auf (Außendurchmesser + Innendurchmesser) des Führungsteils/2,5.

2. Bandführung nach Anspruch 1, wobei die Drehstoppeinrichtung einen Stift (29, 134, 156), der auf der Bandpositions-Beschränkungseinrichtung vorgesehen ist, die auf eier Basis (32, 143, 151) angeordnet ist, an der das Lager (19, 139, 154) befestigt ist, und ein Eingriffsteil (32a, 143a) an einer vorgegebenen Position der Basis (32, 143, 151) besitzt, um den Stift (29, 134, 156) zu erfassen.

3. Bandführung nach Anspruch 2, wobei die Drehstoppeinrichtung ein Drehstoppteil (28) besitzt, welches auf dem Bandpositions-Beschränkungsteil (14) auf der Basisseite vorgesehen ist, um den Ultraschallschwinger (24) zu kontaktieren, so daß verhindert wird, daß der Ultraschallschwinger (24) sich dreht.

4. Bandführung nach Anspruch 2, wobei die Drehstoppeinrichtung einen Ausnehmungsbereich (141a) besitzt, der auf dem Führungsteil (152) gebildet ist und in welchem der Stift (134) eingepaßt ist.

5. Bandführung nach Anspruch 1, wobei der Ultraschallschwinger (24) eine Antriebsschicht (50) umfaßt, die in Abhängigkeit vom Anlegen eines Ansteuersignals angetrieben wird, und eine Pufferschicht (51), die durch Anlegen des Ansteuersignals nicht angetrieben wird, wobei die Nichtantriebs-Schicht (51) am Führungsteil (21) befestigt ist.

6. Bandführung nach Anspruch 5, wobei ein Bereich (52a), bei dem die Pufferschicht das Führungsteil (21) kontaktiert, kleiner ist als ein Bereich, bei dem die Pufferschicht (51) die Antriebsschicht (50) im Ultraschallschwinger (24) kontaktiert.

7. Bandführung nach Anspruch 5, wobei das Führungsteil (21) aus einem leitfähigem Material besteht.

8. Bandführung nach Anspruch 1, wobei das Lagerteil (19, 139, 154) eine kurze Welle (33, 131, 154), die vertikal an einer Basis (32, 143, 151) befestigt ist, und ringförmige Führungslager (19b, 145, 154b) umfaßt, die aus einem weichen Material bestehen, die auf der Lagerwelle (33, 131, 154) gegenüber von Knoten von stehenden Wellen vorgesehen sind.

## Revendications

1. Guide-bande (17, 130, 150) comprenant un élément de guidage (21, 141, 152) d'une conformation cylindrique destiné à guider une bande ; un vibreur à ultrasons (24, 144, 153) fixé à l'élément de guidage (21, 141, 152) destiné à faire vibrer l'élément de guidage avec des ondes stationnaires ; un support (19, 139, 154) destiné à supporter l'élément de guidage (21, 141, 152) au niveau de positions nodales de support des ondes stationnaires ; deux moyens de restriction de position de bande (12, 14d, 132a, 132b, 154a, 155) destinés à restreindre la position de la bande par rapport à une direction transversale de l'élément de guidage (21, 141, 152) ; et un moyen d'arrêt de rotation (29, 134, 156) situé sur au moins l'un des deux moyens de restriction de position de bande (12, 14d, 132a, 132b, 154a, 155) pour empêcher l'élément de guidage (21, 141, 152) de tourner ;

caractérisé en ce que la longueur (L) du vibreur à ultrasons, mesurée à partir d'une position au niveau de laquelle le vibreur à ultrasons (24) est fixé à l'élément de guidage (21), dans la direction diamétrale, est sélectionnée de façon à minimiser le coefficient de frottement (μ) entre l'élément de guidage (21) et la bande et est égale au (diamètre extérieur + diamètre intérieur) de l'élément de guidage/2,5.

2. Guide-bande selon la revendication 1, dans lequel l'élément d'arrêt de rotation comprend un élément formant axe (29, 134, 156) situé sur le moyen de restriction-de position de bande situé sur un socle (32, 143, 151) auquel l'élément de support (19, 139, 154) est fixé et un élément coopérant (32a, 143a) situé à un emplacement prédéterminé du socle (32, 143, 151) de façon à coopérer avec l'élément formant axe (29, 134, 156).

3. Guide-bande selon la revendication 2, dans lequel le moyen d'arrêt de rotation comprend un élément d'arrêt de rotation (28) situé sur l'élément de restriction de position de bande (14) sur le côté du socle de façon à être en contact avec le vibreur à ultrasons (24), de sorte que le vibreur à ultrasons (24) ne puisse pas tourner.

4. Guide-bande selon la revendication 2, dans lequel le moyen d'arrêt de rotation comprend une partie évidée (141a) formée sur l'élément de guidage (152) et sur laquelle l'élément formant axe (134) est ajusté.

5. Guide-bande selon la revendication 1, dans lequel le vibreur à ultrasons (24) comprend une couche d'excitation (50) qui est excitée en réponse à l'application d'un signal d'excitation et une couche tampon (51) qui n'est pas excitée par l'application du signal d'excitation, la couche de non excitation (51) étant fixée à l'élément de guidage (21).

6. Guide-bande selon la revendication 5, dans lequel la superficie (52a) au niveau de laquelle la couche tampon est en contact avec l'élément de guidage (21) est plus petite qu'une superficie dans laquelle la couche tampon (51) est en contact avec la couche d'excitation (50) dans le vibreur à ultrasons (24).

7. Guide-bande selon la revendication 5, dans lequel l'élément de guidage (21) est réalisé à partir d'un matériau conducteur.

8. Guide-bande selon la revendication 1, dans lequel l'élément de support (19, 139, 154) comprend un arbre court (33, 131, 154) fixé verticalement à un socle (32, 141, 141) et des moyens de support de guide de forme annulaire (19b, 145, 154b) réalisés à partir d'un matériau souple situés sur l'arbre de support (33, 131, 154) à l'opposé des noeuds des ondes stationnaires.

# F I G. 1

# F I G. 2

# F I G. 3

EP 0 508 769 B1

# FIG. 4

13

F I G. 5

F I G. 6

# F I G. 7

# F I G. 8

# F I G. 9

# F I G. 10

# F I G. 11

155    153

FIG. 12

FIG. 13

# F I G. 14

# F I G. 15